Europäisches Patentamt

(19) European Patent Office

Office européen des brevets

(11) Publication number: **0 040 421**
**B1**

(12) **EUROPEAN PATENT SPECIFICATION**

(45) Date of publication of patent specification: **16.01.85**

(51) Int. Cl.⁴: **B 27 B 33/08**

(21) Application number: **81103778.7**

(22) Date of filing: **18.05.81**

(54) **Circular rip saw blade.**

(30) Priority: **19.05.80 US 150640**

(43) Date of publication of application:
**25.11.81 Bulletin 81/47**

(45) Publication of the grant of the patent:
**16.01.85 Bulletin 85/03**

(84) Designated Contracting States:
**DE FR GB IT SE**

(56) References cited:
**US-A-2 770 267**
**US-A-3 700 016**
**US-A-3 730 038**
**US-A-4 034 638**
**US-A-4 135 421**

(73) Proprietor: **LaVelle, Donald R.**
**225 East Main**
**Cottage Grove Oregon 97424 (US)**

(72) Inventor: **LaVelle, Donald R.**
**225 East Main**
**Cottage Grove Oregon 97424 (US)**

(74) Representative: **Zapfe, Hans, Dipl.-Ing.**
**Seestrasse 2 Postfach 30 04 08**
**D-6054 Rodgau-3 (DE)**

Courier Press, Leamington Spa, England.

## Description

The invention refers to a circular rip saw blade for the longitudinal sawing of wood, with shoulder portions spaced about the saw perimeter defining open gullet areas therebetween, and with saw teeth each of block shape with an outer tooth surface and a major axis MA, being secured to each one of the shoulder portions and having a bevelled front face defining a cutting edge which is substantially parallel to the axis of rotation of the blade and an included face angle with respect to a blade radius R intersecting the said cutting edge said face angle being at least forty degrees.

Conventional saws of the present type as used in sawmills comprise a circular steel disk several inches in diameter having tungsten carbide teeth spaced about the saw perimeter with the major axis of each tooth in chordal relationship with the circular saw body. A frontal face of the tooth is parallel to said axis. In rip saws that cut with the grain of the wood the hook or rake angle of the teeth, i.e., the included angle defined by a blade radius and the tooth frontal face, is normally between twenty and thirty degrees. Increasing the tooth hook or rake angle while advantageous to saw blade efficiency reduces the mass of the saw shoulder, that area of the blade rearward of the tooth, to the extent that the shoulder is weakened and rendered susceptible to fatigue and fracturing.

US—A—3 700 016 discloses a saw blade according to the definition of the species, i.e., a "rip saw" for longitudinally sawing wood in which the cutting edge has a position transverse to the blade resp. parallel to the blade axis. However, the major axis of the saw teeth is by no means substantially normal to the said blade radius, but below thirty degrees.

A conventional saw blade very similar to that of US—A—3 700 016 was subject of a comparative test with the inventive saw blade, the test being carried out by the University of California Forest Products Laboratory in Richmond, California. The teeth of this conventional blade extend in a more radial than tangential direction. The test clearly showed, that with respect to:

      saw tooth wear,
      power used,
      noise development and
      surface roughness

the conventional rip saw blade had substantial drawbacks with respect to the inventive rip saw blade.

US—A—4 034 638 discloses a circular saw blade which does not correspond to the definition of the species, i.e. the saw is not usable as a rip saw, but rather is limited to use for cutting off board ends where no great amount of sawdust collects in the gullet areas. The purpose of the saw is reduced noise of operation, but not efficiency. The top angle or top clearance may be between five degrees and fifteen degrees and preferably ten degrees. Such a value is not substantially normal to the blade radius intersecting the cutting edge. Furthermore the cutting edge of the known saw blade is not transverse, i.e. parallel to the axis of the saw blade, but shall have a face bevel angle of preferably ten degrees. The most essential difference is the face or rake angle. Whereas the specification is silent with respect to the face angle, a value of about twenty degrees to an intersecting radius may be taken from the drawing. The conventional face angle of twenty degrees and inclined major axis results in the teeth encountering substantial outward load vectors tending to dislodge the teeth.

It is an object of the invention to improve a saw blade as defined in the preamble of claim 1 in order to provide a saw blade having a lower arbor power requirement, less tooth wear, is less susceptible to wander to provide a straight curve and hence provides a saw blade particularly suited for use in over-and-under edger saw arrangement without reducing or weakening the supporting blade shoulder.

According to the invention the solution of this object is characterized in that the major axis MA is substantially normal to the said blade radius R, the outer tooth surface being within five degrees of normal to the said blade radius R providing clearance angle, and the said face angle Y being forty-five degrees, with a range of plus or minus five degrees, to the said blade radius R.

The inventive tooth face angle of forty-five degrees plus/minus five degrees in combination with a tooth major axis disposed normal to an intersecting radius results: (1) in a "sharp" tooth encountering a reduced load when severing wood fibres and (2) a tooth where load vectors are orientated lengthwise along the tooth as opposed to being inclined to the tooth axis and hence causing tooth separation from the blade. Several advantages result from applicant's tooth arrangement, e.g.: No reduction or weakening of the supporting blade shoulder, less arbor power for energy conservation, less tooth wear, less blade thickness resulting in a narrower kerf for wood conservation and a saw blade less susceptible to wobble or wander by reason of encountering reduced cutting loads. This last feature is particularly advantageous in an edger machine having over-and-under-saw blades cutting a common edge.

In the drawing:

Figure 1 is a fragmentary side elevational view in a slightly reduced scale of saw blade incorporating the present invention;

Figure 2 is a plan view of a saw blade segment;

Figure 3 is a side elevational view of Figure 2;

Figure 4 is a view similar to Figure 2 but showing a modified tooth; and

Figure 5 is a view similar to Figure 3 but showing still another modified tooth.

With continuing reference to the drawing wherein applied reference numerals indicate parts similarly hereinafter identified, the reference numeral 1 indicates a saw blade or disk of generally circular shape having a central aperture A enabling mounting of the blade, usually in a ganged manner, on a powered saw arbor for arrow indicated rotation about an axis X. As noted earlier, the present saw blade is a rip or edger saw.

Tooth supporting blade portions or shoulders at 2 are spaced about the blade's peripheral region and have a forward or leading edge 2A, an outer edge 2B and a rear or trailing edge 2C. The trailing edge 2C of one shoulder and the leading edge 2A of an adjacent shoulder define open gullet areas 3 within which the severed chip is received.

The outer edge 2B of each shoulder is normal to a blade radius and includes an inset, tooth receiving segment to which is secured a tooth or insert 5 of tungsten carbide or the like brazed or silver soldered in place at 6. A front face of the tooth is at 7, a back face at 8, side faces as at 9 and an outer surface at 10. The tooth is of elongate, block shape with front face 7 bevelled to define, along with a blade radius at R, a face angle at Y. The front face terminates in a square (to path of travel) transverse cutting edge 12. Angle Y is preferably forty-five degrees but with an acceptable range of plus or minus five degrees. Lateral face edges are at 7A.

The major or lengthwise axis of the tooth is indicated at MA. Said axis is substantially normal at Z to blade radius R.

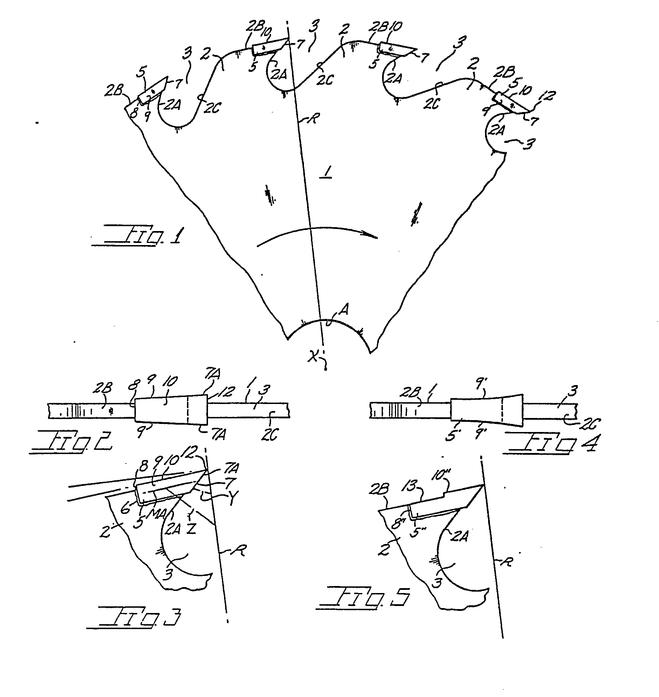

The outer surface 10 of each tooth is inclined inwardly and rearwardly relative the saw blade and saw rotation in the magnitude of about five degrees, to provide clearance aft of tooth cutting edge 12. Similarly, side faces 9, as viewed in Figure 2, are inclined with respect to a vertical medial plane of the tooth to avoid undue frictional engagement with the kerf walls.

In the modified tooth 5' shown in figure 4, the side faces 9' are radiused on about two inch centers to provide kerf clearance.

In figure 5, I show a still further modified tooth 5" wherein a tooth outer surface at 10" is of irregular configuration for kerf clearance. A relieved segment at 13 extends forwardly from the tooth rear face 8" to approximately the midpoint of the tooth to enable tooth sharpening without diminishing tooth strength.

The present blade may be any diameter corresponding in size to conventional arbor mounted saws and similarly may bear approximately the same number of teeth. In one embodiment of the saw, the carbide tungsten tooth outer surface 10 has a length of 12,7 mm with transverse cutting edge 12 being only 4,6 mm to cut an economical kerf with tooth width decreasing at its back face to 3,8 mm. Saw blade thickness is somewhat less than the last dimension, for example 2,8 mm. The tooth front face 7 is desirably offset forwardly in the direction of rotation from the leading edge 2A of a subjacent shoulder to permit subsequent sharpening of the tooth without edge interference.

The outer edge 2B of each saw shoulder is substantially tangential to the circular path of said edge to provide a shoulder of requisite mass to support the tooth against load forces imparted along vectors generally orientated lengthwise to the tooth. From the foregoing, it will be seen, that a tooth positioned in accordance with present saw blade construction clearly avoids destructive loads heretofore encountered by conventional "upright" disposed teeth (with face angles of about thirty degrees) which loads act about a saw shoulder fulcrum to subject the tooth brazing or solder (or the saw shoulder) to fracture.

While I have shown but a few embodiments of the invention it will be apparent to those skilled in the art that the invention may embodied still otherwise without departing from the spirit and scope of the invention.

## Claims

1. A circular rip saw blade (1) for the longitudinal sawing of wood, with shoulder portions (2) spaced about the saw perimeter defining open gullet areas (3) therebetween, and with saw teeth (5, 5") of block shape with an outer tooth surface (10) and a major axis (MA), each being secured to each one of the shoulder portions (2) and having a bevelled front face (7) defining a cutting edge (12) which is substantially parallel to the axis of rotation of the blade and an included face angle (Y) with respect to a blade radius (R) intersecting the said cutting edge (12), said face angle being at least forty degrees, characterised in that the major axis (MA) is substantially normal to the said blade radius (R), the outer tooth surface (10) being within five degrees of normal to the said blade radius (R) providing clearance angle, and the said face angle (Y) being forty-five degrees, with a range of plus or minus five degrees, to the said blade radius (R).

2. The blade claimed in claim 1, characterized in that said included face angle (Y) is approximately forty-five degrees.

3. The saw blade claimed in claim 1, characterized in that, the shoulder portions (2) each have an outer edge (2B) substantially normal to the saw blade radius (R) and terminating at one extremity at a rear face (8, 8") of the tooth (5, 5") in place on the shoulder (2).

4. The saw blade claimed in claim 1, characterized in that, the shoulder portions (2) each have a leading edge (2A) partially defining the saw blade gullet (3), said leading edge being in offset relationship to the tooth front face (7).

5. The saw blade claimed in claim 1, characterized in that each of said teeth (5, 5") has inwardly curved side faces (9, 9').

6. The saw blade claimed in claim 1, characterized in that each of said teeth (5, 5") has an irregular outer surface (10, 10″) to provide kerf wall and chip clearance.

7. The saw blade according to claim 2, characterized in that the outer edge (2B) of the shoulder portions (2) is substantially normal to that blade radius (R) passing through the center thereof.

## Revendications

1. Lame (1) de scie circulaire de long destinée au sciage du bois en long, avec des parties (2) d'épaulement espacées autour de la périphérie de la scie et délimitant des évidements (3) qui débouchent entre elles, et avec des dents de scie (5, 5″) ayant chacune la configuration d'un bloc qui a une surface externe de dent (10) et un grand axe (MA), chaque dent étant fixée à une partie d'épaulement (2) et ayant une face avant chanfreinée (7) délimitant un bord de coupe (12) qui est sensiblement parallèle à l'axe de rotation de la lame et un angle d'attaque inclus (Y) par rapport au rayon (R) qui recoupe le bord de coupe (12), l'angle d'attaque étant d'au moins 40 degrés, caractérisée en ce que l'axe principal (MA) est sensiblement perpendiculaire au rayon de la lame (R), la surface externe (10) des dents s'écartant de moins de 5 degrés de la normale au rayon de la lame (R) en délimitant un angle de dépouille, et l'angle d'attaque (Y) est de 45 degrés, plus ou moins 5 degrés, par rapport au rayon de la lame (R).

2. Lame de scie selon la revendication 1, caractérisée en ce que l'angle d'attaque inclus (Y) est d'environ 45 degrés.

3. Lame de scie selon la revendication 1, caractérisée en ce que les parties d'épaulement (2) ont chacune un bord externe (2B) sensiblement perpendiculaire au rayon de la lame (R) et aboutissant à une première extrémité à une face arrière (8, 8″) de la dent (5, 5″) en place sur l'épaulement (2).

4. Lame de scie selon la revendication 1, caractérisée en ce que les parties d'épaulement (2) ont chacune un bord antérieur (2A) délimitant partiellement l'évidement (3) de la lame de scie, le bord antérieur étant décalé par rapport à la face avant de la dent (7).

5. Lame de scie selon la revendication 1, caractérisée en ce que chaque dent (5, 5″) a des faces latérales (9, 9′) courbées vers l'intérieur.

6. Lame de scie selon la revendication 1, caractérisée en ce que chacune des dents (5, 5″) a une surface externe irrégulière (10, 10″) afin qu'un jeu soit formé pour les copeaux et la paroi de l'entaille.

7. Lame de scie selon la revendication 2, caractérisée en ce que le bord externe (2B) des parties d'épaulement (2) est sensiblement perpendiculaire au rayon de la lame (R) passant par son centre.

## Patentansprüche

1. Kerb-Kreissägeblatt (1) für das Längssägen von Holz, mit auf dem Umfang des Sägeblatts verteilten, Kerbbereiche (3) zwischen sich einschliessenden Schulterteilen (2), und mit Sägezähnen (5, 5″), von denen jeder blockförmig ausgebildet ist und eine äußere Zahnoberfläche (10) und eine Hauptachse (MA) aufweist, mit jeweils einem der Schulterteile (2) verbunden ist und eine abgeschrägte Vorderseite (7) aufweist, die eine im wesentlichen parallel zur Drehachse des Sägeblatts verlaufende Schneidkante (12) definiert und gegenüber einem die besagte Schneidkante (12) schneidenden Sägeblattradius (R) einen Flächenwinkel (Y) einschließt, wobei der besagte Flächenwinkel mindestens 40 Grad beträgt, dadurch gekennzeichnet, daß die Hauptachse (MA) im wesentlichen senkrecht zum Sägeblattradius (R) verläuft, die äußere Zahnoberfläche (10) innerhalb von 5 Grad zur Senkrechten auf den Sägeblattradius (R) verläuft und einen Freischnittwinkel bildet, und daß der besagte Flächenwinkel (Y) unter 45 Grad mit einem Bereich von plus oder minus 5 Grad zu dem besagten Sägeblattradius (R) verläuft.

2. Kerb-Kreissägeblatt nach Anspruch 1, dadurch gekennzeichnet, daß der eingeschlossene Flächewinkel (Y) angenähert 45 Grad beträgt.

3. Kerb-Kreissägeblatt nach Anspruch 1, dadurch gekennzeichnet, daß die Schulterteile (2) je eine äußere Kante (2B) besitzen, die im wesentlichen senkrecht zum Sägeblattradius (R) verläuft und mit ihrem einen Ende an eine Rückseite (8, 8″) des auf der Schulter (2) angebrachten Zahnes (5, 5″) anstößt.

4. Kerb-Kreissägeblatt nach Anspruch 1, dadurch gekennzeichnet, daß die Schulterteile (2) je eine Vorderkante (2A) besitzen, die teilweise die Sägeblattkerbe (3) begrenzt und die gegenüber der Zahn-Vorderfläche (7) zurückgesetzt ist.

5. Kerb-Kreissägeblatt nach Anspruch 1, dadurch gekennzeichnet, daß jeder der besagten Zähne (5, 5″) einwärts gekrümmte Seitenflächen (9, 9′) besitzt.

6. Kerb-Kreissägeblatt nach Anspruch 1, dadurch gekennzeichnet, daß jeder der besagten Zähne (5, 5″) eine unregelmäßige Außenfläche (10, 10″) aufweist, die eine Schnittfläche und einen Span-Freiraum bilden.

7. Kerb-Kreissägeblatt nach Anspruch 2, dadurch gekennzeichnet, daß die Außenkante (2B) der Schulterteile (2) im wesentlichen senkrecht zu demjenigen Sägeblattradius (R) ausgerichtet ist, der durch die Mitte der Außenkante verläuft.

*Fig. 1*

*Fig. 2*

*Fig. 4*

*Fig. 3*

*Fig. 5*